(19) Europäisches Patentamt
European Patent Office
Office européen des brevets

(11) Veröffentlichungsnummer: **0 427 080 B1**

(12) # EUROPÄISCHE PATENTSCHRIFT

(45) Veröffentlichungstag der Patentschrift: **22.06.94**

(51) Int. Cl.[5]: **C08F 4/651**, C08F 4/654, C08F 10/00

(21) Anmeldenummer: **90120682.1**

(22) Anmeldetag: **29.10.90**

(54) **Katalysatorsysteme vom Typ der Ziegler-Natta-Katalysatoren.**

(30) Priorität: **06.11.89 DE 3936857**

(43) Veröffentlichungstag der Anmeldung:
**15.05.91 Patentblatt 91/20**

(45) Bekanntmachung des Hinweises auf die Patenterteilung:
**22.06.94 Patentblatt 94/25**

(84) Benannte Vertragsstaaten:
**AT BE DE ES FR GB IT NL**

(56) Entgegenhaltungen:
**EP-A- 0 171 200**
**EP-A- 0 407 808**
**US-A- 4 211 670**

(73) Patentinhaber: **BASF Aktiengesellschaft**
**Carl-Bosch-Strasse 38**
**D-67063 Ludwigshafen(DE)**

(72) Erfinder: **Koelle, Peter, Dr.**
**An der Froschlache 19**
**W-6700 Ludwigshafen(DE)**
Erfinder: **Schwager, Harald, Dr.**
**Ziegelofenweg 7**
**W-6720 Speyer(DE)**
Erfinder: **Kerth, Juergen, Dr.**
**Wattenheimer Strasse 15**
**W-6719 Carlsberg(DE)**
Erfinder: **Zolk, Ralf, Dr.**
**Weinbietstrasse 7**
**W-6714 Weisenheim(DE)**

**EP 0 427 080 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Katalysatorsysteme vom Typ der Ziegler-Natta-Katalysatoren, enthaltend als aktive Bestandteile

a) eine titanhaltige Feststoffkomponente, die Titan, Magnesium, Halogen und einen Carbonsäureester enthält,

sowie als Cokatalysator

b) eine Aluminiumverbindung und

c) gegebenenfalls weitere Elektronendonorverbindungen,

die durch die Verwendung von Estern spezieller Carbonsäuren gekennzeichnet sind.

Außerdem betrifft die Erfindung die Herstellung solcher Katalysatorsysteme, die Herstellung von Polymerisaten des Propylens mit Hilfe dieser Katalysatorsysteme, die hiernach erhältlichen Polymerisate sowie Folien und Formkörper aus diesen Polymerisaten.

Katalysatorsysteme vom Typ der Ziegler-Natta-Katalysatoren sind u.a. aus der EP-B 14523, der EP-A-23425, der EP-A 45975 und der EP-A 195 497 bekannt. Diese Systeme werden insbesondere zur Polymerisation von $\alpha$-Olefinen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titanverbindung und andererseits als Cokatalysator verwendet werden.

Um eine wirtschaftliche Polyolefinproduktion zu gewährleisten, müssen solche Katalysatorsysteme u.a. eine hohe Produktivität aufweisen. Darunter versteht man das Verhältnis der gebildeten Menge Polymerisat zur Menge des eingesetzten Katalysators. Weiterhin ist es erforderlich, daß die dabei erhältlichen Polymerisate möglichst stereospezifisch ausgerichtet sind, d.h. der Anteil nichtisotaktischer Molekülstrukturen in Homopolymerisaten sollte 2 bis 2,5 % nicht übersteigen.

Diese beiden Zielvorgaben lassen sich nach dem Stand der Technik zusammen nur bedingt verwirklichen. So ist beispielsweise aus der EP-A 86473 ein Katalysatorsystem bekannt, bei dem als Elektronendonorverbindungen als Bestandteile der titanhaltigen Feststoffkomponente Carbonsäureester und als Cokatalysator u.a. Siliciumverbindungen verwendet werden, das zwar eine befriedigend hohe Produktivität aufweist, im Hinblick auf die Stereospezifität der entstehenden Polymerisate aber zu wünschen übrig läßt. In der EP-A 171 200 wird ferner ein Ziegler-Natta-Katalysatorsystem beschrieben, das als Bestandteil der titanhaltigen Feststoffkomponente u.a. Carbonsäureester, sowie Silicium- und Aluminiumverbindungen als Cokatalysatoren enthält. Dieses Katalysatorsystem ermöglicht die Herstellung von Polypropylenen mit hoher Stereospezifität, weist aber neben einer nicht mehr befriedigenden Produktivität den weiteren Nachteil auf, daß die Kornverteilung des hierbei erhältlichen Polymerisats zu breit ist.

Aus der EP-A 0 407 808 ist ein Katalysatorsystem zur Polymerisation von Olefinen bekannt, welches aus einer titanhaltigen Feststoffkomponente, die u.a. einen Ketoester enthält, sowie einer organischen Elektronendonorkomponente besteht, wobei die titanhaltige Feststoffkomponente nicht geträgert ist.

Neben diesen, insbesondere für die Verarbeitung der Polymerisate wichtigen Eigenschaften ist auch ein niedriger Halogengehalt im Polyolefin von Bedeutung, um die Verwendung derartiger Materialien in Kombination mit korrosionsgefährdeten Stoffen zu ermöglichen. Dazu ist es vor allem notwendig, den Halogengehalt im Polymerisat deutlich zu reduzieren.

Polymerisationsverfahren zur Herstellung von Polyolefinen werden vorteilhaft in Lösung, in einer Aufschlämmung oder in der Gasphase durchgeführt. Gegenüber den anderen Polymerisationsverfahren unterscheidet sich die Gasphasenpolymerisation durch eine besonders einfache Verfahrensführung. Dabei muß jedoch eine Verringerung der Katalysatorproduktivität sowie eine Verschlechterung der Stereospezifität und der morphologischen Eigenschaften der entstehenden Polymerisate in Kauf genommen werden. So wird beispielsweise in der GB-A 2 111 066 ein Katalysatorsystem zur Polymerisation von Polyolefinen beschrieben, das ebenfalls u.a. Carbonsäureester als Bestandteile der titanhaltigen Feststoffkomponente und Siliciumverbindungen als Cokatalysatoren enthält. Dieses Katalysatorsystem zeichnet sich durch eine hohe Produktivität und durch gute Produkteigenschaften der dabei gebildeten Homopolymerisate, insbesondere hinsichtlich der Stereospezifität, der Kornverteilung und des Feinstkornanteils aus. Wie der nachstehende Vergleichsversuch A zeigt, verschlechtern sich diese Eigenschaften jedoch erheblich, wenn die Polymerisation statt in der Lösungsphase in der Gasphase durchgeführt wird.

Der vorliegenden Erfindung lag als Aufgabe die Entwicklung eines neuen Katalysatorsystems zugrunde, mit dem den geschilderten Nachteilen weitgehend abgeholfen werden kann und mit dem es möglich ist, auch in der Gasphase Polypropylen mit hoher Produktivität herzustellen, das sich durch eine hohe Stereospezifität und durch gute morphologische Eigenschaften, insbesondere durch einen möglichst geringen Feinstkornanteil, auszeichnet.

Demgemäß wurden die in den Patentansprüchen angeführten neuen Katalysatorsysteme gefunden.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate gut bewährt haben. Als besonders bevorzugter Träger wird $SiO_2 \cdot aAl_2O_3$ verwendet, wobei a für einen Wert im Bereich von 0 bis 2, insbesondere im Bereich von 0 bis 0,5 steht.

Weiter werden bei der Herstellung der titanhaltigen Feststoffkomponente u.a. Verbindungen des Magnesiums eingesetzt. Als solche kommen Magnesiumhalogenide, Magnesiumaryle, Magnesiumalkyle und Magnesiumalkoxy-, sowie Magnesiumaryloxyverbindungen in Betracht, wobei insbesondere Magnesiumdichlorid, Magnesiumdibromid und Magnesium-($C_1$-$C_{10}$-alkyl)-Verbindungen verwendet werden. Daneben erhält diese Komponente noch Halogen, bevorzugt Chlor oder Brom.

Erfindungsgemäß enthält die titanhaltige Feststoffkomponente noch einen Ester einer Benzophenon-2-carbonsäure der Formel I,

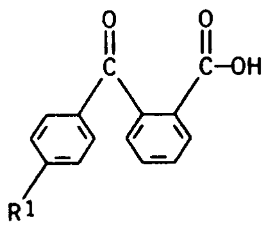

(I)

wobei $R^1$ ein H-Atom, eine $C_1$-$C_{15}$-Alkylgruppe oder ein Chloratom bedeutet. Bevorzugt sind dabei solche Benzophenon-2-carbonsäuren, bei denen $R^1$ eine $C_1$-$C_4$-Alkylgruppe oder ein Chloratom bedeutet.

Als Hydroxyverbindungen werden die bei Veresterungsreaktionen üblichen Alkohole verwendet, u.a. $C_1$-$C_{15}$-Alkanole, $C_5$-$C_7$-Cycloalkanole, die ihrerseits $C_1$-$C_{10}$-Alkylgruppen tragen können, sowie $C_6$-$C_{10}$-Phenole. Bevorzugt eingesetzte Ester enthalten als Alkoholreste $C_1$-$C_{10}$-Alkanole.

Beispiele für besonders gut geeignete Ester sind u.a. die Ester der 4'-Methylbenzoyl-2-benzoesäure, der 4-Ethylbenzoyl-2-benzoesäure und der 4'-Chlorbenzoyl-2-benzoesäure, wobei als Hydroxyverbindungen insbesondere n- und iso-Butanol, neo-Pentanol, n- und iso-Hexanol, n- und iso-Heptanol und n- und iso-Octanol verwendet werden.

Die titanhaltige Feststoffkomponente kann in sonst an sich bekannter Weise hergestellt werden, wie sie z.B. in der EP-A 45975, der EP-A 45977, der EP-A 86473, der EP-A 171200 und der GB-A 21 11 066 beschrieben ist.

Vorzugsweise wird zur Herstellung der titanhaltigen Feststoffkomponente folgendes zweistufige Verfahren verwendet.

In der ersten Stufe versetzt man zunächst einen feinteiligen Träger, bevorzugt $SiO_2 \cdot aAl_2O_3$ - wobei a für eine Zahl im Bereich von 0 bis 2, insbesondere im Bereich von 0 bis 0,5 steht - der in allgemeinen einen Teilchendurchmesser von 0,1 bis 1000 $\mu$m, insbesondere von 10 bis 300 $\mu$m, ein Porenvolumen von 0,1 bis 10 $cm^3/g$, insbesondere von 1,0 bis 4,0 $cm^3/g$, und eine spezifische Oberfläche von 10 bis 1000 $m^2/g$, insbesondere von 100 bis 500 $m^2/g$, aufweist, mit einer Lösung der magnesiumhaltigen Verbindung in einem flüssigen Alkan, wonach man dieses Gemisch 0,5 bis 2 Stunden lang bei einer Temperatur zwischen 10 und 120 °C rührt. Vorzugsweise setzt man pro Mol $SiO_2 \cdot aAl_2O_3$ 0,1 bis 1 mol der Magnesiumverbindung ein. Anschließend gibt man unter ständigem Rühren ein Halogen oder einen Halogenwasserstoff, insbesondere Chlor oder Chlorwasserstoff, im wenigstens zweifachen, bevorzugt im wenigstens fünffachen molaren überschuß, bezogen auf die magnesiumhaltige Verbindung, hinzu. Nach etwa 30 bis 120 Minuten fügt man diesem Reaktionsprodukt bei einer Temperatur zwischen 10 und 150 °C ein $C_1$-$C_8$-Alkanol, insbesondere Ethanol, ein Halogenid oder ein Alkoholat des drei- oder vierwertigen Titans, insbesondere Titantetrachlorid, sowie den erfindungsgemäß einzusetzenden Benzophenon-2-carbonsäureester hinzu. Dabei setzt man pro Mol Magnesium aus der magnesiumhaltigen Verbindung 1 bis 5 Mol, insbesondere 2 bis 4 Mol, Alkanol, 2 bis 20 Mol, insbesondere 4 bis 10 Mol, des drei- oder vierwertigen Titans und 0,01 bis 1 Mol, insbesondere 0,1 bis 0,5 Mol, des Benzophenon-2-carbonsäureesters ein. Das Gemisch wird wenigstens eine Stunde lang bei einer Temperatur zwischen 10 und 150 °C gerührt, der so erhaltene feste Stoff anschließend abfiltriert und mit einem $C_7$-$C_{10}$-Alkylbenzol, insbesondere Ethylbenzol, gewaschen.

In der zweiten Stufe extrahiert man den aus der ersten Stufe erhaltenen Feststoff einige Stunden lang bei Temperaturen zwischen 100 und 150 °C mit überschüssigem Titantetrachlorid oder einer im überschuß

vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der waschflüssigkeit an Titantetrachlorid geringer ist als 2 Gew.-%.

Die auf diese Weise erhältliche titanhaltige Feststoffkomponente wird zusammen mit Cokatalysatoren als Ziegler-Natta-Katalysatorsystem verwendet. Als Cokatalysatoren kommen dabei insbesondere Aluminiumverbindungen in Frage. Vorzugsweise werden neben einer Aluminiumverbindung noch Elektronendonorverbindungen als weitere Cokatalysatoren eingesetzt.

Als Aluminiumverbindungen kommen dabei neben Trialkylaluminium auch solche Verbindungen in Betracht, bei denen eine Alkylgruppe durch eine Alkoxygruppe oder durch ein Halogenatom, beispielsweise durch ein Chlor- oder ein Bromatom, ersetzt ist. Bevorzugt werden Trialkylaluminiumverbindungen verwendet, deren Alkylgruppen jeweils 1-8 C-Atome aufweisen, beispielsweise Trimethyl-, -triethyl oder Methyldiethylaluminium.

Neben der titanhaltigen Feststoffkomponente und der Aluminiumverbindung enthalten die erfindungsgemäßen Katalysatorsysteme bevorzugt ferner noch Elektronendonorverbindungen wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Elektronendonorverbindungen, die bevorzugt als Cokatalysatoren verwendet werden, sind siliciumorganische Verbindungen der Formel II

$R^2_nSi(OR^3)_{4-n}$ (II),

wobei

- $R^2$ eine $C_1$-$C_{20}$-Alkylgruppe, eine 5- bis 7-gliedrige Cycloalkylgruppe, die ihrerseits eine $C_1$-$C_{10}$-Alkylgruppe tragen kann, oder eine $C_6$-$C_{20}$-Aryl- oder Arylalkylgruppe,
- $R^3$ eine $C_1$-$C_{20}$-Alkylgruppe bedeutet und
- n für die Zahlen 1, 2 oder 3 steht.

Besonders bevorzugt werden dabei solche Verbindungen, in denen $R^2$ eine $C_1$-$C_8$-Alkylgruppe oder eine 5-bis 7-gliedrige Cycloalkylgruppe, sowie $R^3$ eine $C_1$-$C_4$-Alkylgruppe bedeutet und n für die Zahl 2 steht.

Unter diesen Verbindungen sind insbesondere Dimethoxydiisopropylsilan, Dimethoxyisobutylisopropylsilan, Dimethoxydiisobutylsilan, Diethoxyisobutylisopropylsilan und Dimethoxydicyclopentylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10 : 1 bis 800 : 1, insbesondere 20 : 1 bis 200 : 1, und das Molverhältnis zwischen der Aluminiumverbindung und der weiteren Elektronendonorverbindung c) 1 : 1 bis 100 : 1, insbesondere 2 : 1 bis 80 : 1 beträgt.

Das erfindungsgemäße Katalysatorsystem ist für die Herstellung von Polymerisaten des Propylens besonders geeignet.

Die Herstellung von Polyolefinen, insbesondere von Polymerisaten des Propylens kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Unter Polymerisaten des Propylens werden neben Homopolymerisaten des Propylens auch Copolymerisate des Propylens mit untergeordneten Mengen anderer $\alpha,\beta$-ungesättigter olefinischer Verbindungen mit 2 bis 12 C-Atomen verstanden, z.B. von $\alpha$-Monoolefinen oder von bifunktionellen $\alpha$-Olefinen, wie beispielsweise Hexadi-1,5-en. Besonders geeignete Comonomere sind Ethylen, But-1-en, Pent-1-en, Hex-1-en, Hept-1-en und Oct-1-en.

Die dabei erhaltenen Copolymerisate können sowohl blockartig, als auch statistisch oder alternierend aufgebaut sein. Das erfindungsgemäße Katalysatorsystem eignet sich insbesondere auch zur Herstellung von Propylen-Ethylen-Copolymerisaten mit bis zu 10 Gew.-% von einpolymerisiertem Ethylen und von Terpolymerisaten des Propylens mit untergeordneten Mengen von einpolymerisiertem Ethylen und But-1-en.

Die Polymerisationsreaktion wird zweckmäßigerweise bei Temperaturen von 20 bis 150 °C und Drücken von 1 bis 100 bar durchgeführt. Bevorzugt sind dabei Temperaturen zwischen 40 und 100 °C und Drücke zwischen 10 und 50 bar. Die Molmasse der dabei gebildeten Polyolefine kann durch Zugabe von in der Polymerisationstechnik gebräuchlichen Reglern, beispielsweise von Wasserstoff, kontrolliert und auf eine engere Verteilung eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die erfindungsgemäß erhältlichen Propylenhomo- und copolymerisate sind in den für die Polyolefine üblichen Molmassen erhältlich, wobei Polymerisate mit Molmassen zwischen 20 000 und 500 000 bevorzugt werden.

Das erfindungsgemäße Katalysatorsystem weist gegenüber den bisher bekannten Katalysatorsystemen eine höhere Produktivität und eine verbesserte Stereospezifität, insbesondere bei Gasphasenpolymerisationen auf. Die auf diese Weise zugänglichen Polymerisate zeichnen sich vor allem durch einen sehr geringen Feinstkornanteil (< 0,25 mm) und einen niedrigen Chlorgehalt aus.

Aufgrund ihrer guten mechanischen Eigenschaften eignen sich die auf diese Weise hergestellten Propylenpolymerisate vor allem für die Herstellung von Folien und Formkörpern.

Beispiele

Beispiel 1

a) Herstellung der titanhaltigen Feststoffkomponente (1)

In einer ersten Stufe wurde $SiO_2$, das einen Teilchendurchmesser von 20 bis 45 µm, ein Porenvolumen von 1,7 ml/g und eine spezifische Oberfläche von 330 $m^2$/g aufwies, mit einer Lösung von n-Butyloctylmagnesium in n-Heptan versetzt, wobei pro Mol $SiO_2$ 0,3 Mol der Magnesiumverbindung eingesetzt wurden. Die Lösung wurde 45 Minuten bei 40 °C gerührt, danach auf 20 °C abgekühlt, wonach die 10-fache molare Menge, bezogen auf die magnesium-organische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80 °C gerührt und anschließend mit 7,2 Mol Titantetrachlorid und 0,3 Mol von in Ethylbenzol gelöstem 4'-Methylbenzoyl-2-benzoesäure-isobutylester, jeweils bezogen auf 1 Mol Magnesium, versetzt. Anschließend wurde 1 Stunde bei 100 °C gerührt, der so erhaltene feste Stoff abfiltriert und mehrmals mit Ethylbenzol gewaschen.

Das daraus erhaltene Festprodukt extrahierte man 3 Stunden lang bei 125 °C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,6 Gew.-% Ti
7,7 Gew.-% Mg
27,9 Gew.-% Cl.

b) Polymerisation

In einem mit einem Rührer versehenen 2 l-Stahlautoklaven wurden bei 30 °C 20 g Polypropylenpulver (Schmelzflußindex: 8,0 g/10 min), 3 mmol Triethylaluminium (in Form einer 1-molaren Lösung in n-Heptan), 0,3 mmol Dimethoxyisobutylisopropylsilan (in Form einer 1-molaren Lösung in n-Heptan), 1 l Wasserstoff und 30 mg der gemäß Beispiel 1a hergestellten titanhaltigen Feststoffkomponente vorgelegt. Anschließend wurde die Reaktortemperatur innerhalb von 15 Minuten auf 70 °C erhöht, der Reaktordruck durch Aufpressen von gasförmigem Propylen auf 27 bar gebracht, wonach 2 Stunden lang polymerisiert wurde. Hierbei wurde das verbrauchte Monomere kontinuierlich durch neues ersetzt.

Dabei erhielt man 295,8 g eines Propylenhomopolymerisats mit einer mittleren Molmasse von 260 000. Die Produktivität des Katalysatorsystems, die als das Verhältnis der Menge an gebildetem Polymerisat zur Menge der titanhaltigen Katalysatorkomponente definiert wird, der heptanlösliche Anteil, der eine Maßzahl für den Anteil an nichtisotaktischen Struktureinheiten darstellt, der Feinstkornanteil (< 0,25 mm) und der Chlorgehalt des Polymerisats sind in der nachstehenden Tabelle zusammengestellt.

Beispiel 2

Entsprechend Beispiel 1a wurde eine titanhaltige Feststoffkomponente hergestellt, jedoch anstelle des 4'-Methylbenzoyl-2-benzoesäure-isobutylesters die gleiche molare Menge von 4'-Methylbenzoyl-2-benzoesäure-n-octylester verwendet.

Die titanhaltige Feststoffkomponente enthielt
3,7 Gew.-% Ti
7,1 Gew.-%Mg
27,1 Gew.-% Cl.

Mit diesem Katalysator-Feststoff a) wurde Propylen entsprechend Beispiel 1b polymerisiert. Dabei erhielt man 320,1 g eines Propylenhomopolymerisats mit einer mittleren Molmasse von 250 000. Die weiteren Ergebnisse sind der nachstehenden Tabelle zu entnehmen.

Beispiel 3

Entsprechend Beispiel 1a wurde eine titanhaltige Feststoffkomponente hergestellt, jedoch anstelle des 4'-Methylbenzoyl-2-benzoesäure-isobutylesters die gleiche molare Menge von 4'-Chlorbenzoyl-2-benzoesäure-n-butylester verwendet.

Die titanhaltige Feststoffkomponente enthielt
2,9 Gew.-% Ti
6,5 Gew.-% Mg
27,9 Gew.-% Cl.

Mit diesem Katalysator-Feststoff a) wurde Propylen entsprechend Beispiel 1b polymerisiert. Dabei erhielt man 345,0 g eines Propylenhomopolymerisats mit einer mittleren Molmasse von 260 000. Die Ergebnisse sind der nachstehenden Tabelle zu entnehmen.

Beispiel 4

Entsprechend Beispiel 1a wurde eine titanhaltige Feststoffkomponente hergestellt, jedoch anstelle des 4'-Methylbenzoyl-2-benzoesäure-isobutylesters die gleiche molare Menge von 4-Chlorbenzoyl-2-benzoesäure-isobutylester verwendet.

Die titanhaltige Feststoffkomponente enthielt
3,9 Gew.-% Ti
7,3 Gew.-% Mg
27,8 Gew.-% Cl.

Mit diesem Katalysator-Feststoff a) wurde Propylen entsprechend Beispiel 1b polymerisiert. Dabei erhielt man 357,0 g eines Propylenhomopolymerisats mit einer mittleren Molmasse von 255 000. Die Ergebnisse sind der nachstehenden Tabelle zu entnehmen.

Beispiel 5

Entsprechend Beispiel 1a wurde eine titanhaltige Feststoffkomponente hergestellt, jedoch anstelle des 4-Methylbenzoyl-2-benzoesäure-isobutylesters die gleiche molare Menge von 4-Chlorbenzoyl-2-benzoesäure-neopentylester verwendet.

Die titanhaltige Feststoffkomponente enthielt
3,7 Gew.-% Ti
6,3 Gew.-% Mg
28,3 Gew.-% Cl.

Mit diesem Katalysator-Feststoff a) wurde Propylen entsprechend Beispiel 1b polymerisiert. Dabei erhielt man 359,1 kg eines Propylenhomopolymerisats mit einer mittleren Molmasse von 258 000. Die Ergebnisse sind der nachstehenden Tabelle zu entnehmen.

Vergleichsbeispiel A

Unter den Bedingungen des Beispiels 1 der vorliegenden Patentanmeldung wurde Propylen polymerisiert, abweichend hierzu jedoch mit dem Katalysator gemäß Beispiel 1 der GB-A 2 111 066. Dieser Katalysator wies in der titanhaltigen Feststoffkomponente a) neben Titantetrachlorid und Magnesiumchlorid als Elektronendonor Diisobutylphthalat und Phthalsäureanhydrid auf. Neben der titanhaltigen Feststoffkomponente wurde als Aluminium-Cokatalysator Triethylaluminium und als Elektronendonorverbindung Phenyltriethoxysilan verwendet.

Die titanhaltige Feststoffkomponente a) enthielt
3,1 Gew.-% Ti
17,0 Gew.-% Mg
56,0 Gew.-% Cl.

In der nachstehenden Tabelle sind die Ergebnisse dieses Vergleichsversuchs A mit der Katalysatorkomponente gemäß Beispiel 1 der GB-A 2 111 066 und die der vorliegenden Erfindung (Beispiele 1 bis 5) wiedergegeben.

Vergleichsbeispiel B

Entsprechend Beispiel 1a wurde eine titanhaltige Feststoffkomponente hergestellt, jedoch anstelle des 4'-Methylbenzoyl-2-benzoesäure-isobutylesters die gleiche molare Menge von Benzoesäure-n-butylester verwendet.

Die titanhaltige Feststoffkomponente enthielt
5,1 Gew.-% Ti
6,8 Gew.-% Mg
29,2 Gew.-% Cl.

Mit diesem Katalysator-Feststoff a) wurde Propylen analog Beispiel 1b polymerisiert.

Die Ergebnisse dieses Vergleichsversuchs sind der nachstehenden Tabelle zu entnehmen.

Wie die Tabelle zeigt, erhält man mit den erfindungsgemäßen Katalysatorsystemen unter den Bedingungen der Gasphasenpolymerisation höhere Produktivitäten und Stereospezifitäten und insbesondere einen verringerten Feinstkornanteil im Polymerisat verglichen mit denjenigen, die in der GB-A 2 111 066 verwendet werden.

Tabelle

| | Beispiel 1 | Beispiel 2 | Beispiel 3 |
|---|---|---|---|
| Produktivität (g Polypropylen/ g titanhaltige Feststoffkomponente) | 9860 | 10670 | 11500 |
| heptanlösliche Anteile (Gew.-%) | 1,7 | 1,6 | 1,5 |
| Feinstkornanteil < 0,25 mm (in %) | 0,6 | 0,8 | 0,2 |
| Chlorgehalt im Polymerisat (ppm) | 28 | 25 | 24 |

Tabelle (Forts.)

| | Beispiel 4 | Beispiel 5 | Vergleichsversuch A | Vergleichsversuch B |
|---|---|---|---|---|
| Produktivität (g Polypopylen g titanhaltige Feststoffkomponente) | 11900 | 11970 | 9345 | 6100 |
| heptanlösliche Anteile (Gew.-%) | 1,2 | 2,0 | 2,4 | 8,1 |
| Feinstkornanteil < 0,25 mm (in %) | 0,1 | 0,1 | 82,4 | 0,8 |
| Chlorgehalt im Polymerisat (ppm) | 23 | 24 | 60 | 48 |

**Patentansprüche**

**Patentansprüche für folgende Vertragsstaaten : DE, FR, GB, IT**

1. Katalysatorsysteme vom Typ der Ziegler-Natta-Katalysatoren, enthaltend als aktive Bestandteile
   a) eine titanhaltige Feststoffkomponente, die Titan, Magnesium, Halogen, einen Carbonsäureester und $SiO_2 \cdot aAl_2O_3$ als Trägermaterial enthält, wobei a für einen Wert im Bereich von 0 bis 2 steht,
   sowie als Cokatalysator
   b) eine Aluminiumverbindung und
   c) gegebenenfalls weitere Elektronendonorverbindungen,
   dadurch gekennzeichnet, daß sie in der Feststoffkomponente a) als Carbonsäureester einen Ester einer Benzophenon-2-carbonsäure der Formel I

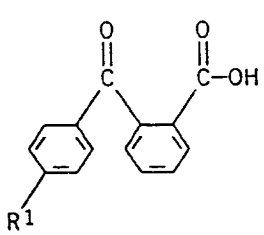

(I)

   enthalten, in der $R^1$ ein H-Atom, eine $C_1$-$C_{15}$-Alkylgruppe oder ein Halogenatom bedeutet, und wobei als Hydroxyverbindungen $C_1$-$C_{15}$-Alkanole, $C_5$-$C_7$-Cycloalkanole, die ihrerseits $C_1$-$C_{10}$-Alkylgruppen tragen können, oder $C_1$-$C_6$-Phenole verwendet werden.

2. Katalysatorsysteme nach Anspruch 1, dadurch gekennzeichnet, daß sie einen Ester der Benzophenon-2-carbonsäure der Formel I enthalten, in der $R^1$ eine $C_1$-$C_4$-Alkylgruppe oder ein Chloratom bedeutet.

**3.** Katalysatorsysteme nach Anspruch 1 oder 2, die als Cokatalysator und Aluminiumverbindung eine Trialkylaluminiumverbindung enthalten, deren Alkylgruppen jeweils 1-8 C-Atome aufweisen.

**4.** Katalysatorsysteme nach den Ansprüchen 1 bis 3, die als weitere Elektronendonorverbindung c, eine Siliciumverbindung der Formel II

$R^2nSi\ (OR^3)_{4-n}$ (II)

enthalten, in der $R^2$ eine $C_1$-$C_{20}$-Alkylgruppe, eine 5- bis 7-gliedrige Cycloalkylgruppe, die ihrerseits eine $C_1$-$C_{10}$-Alkylgruppe tragen kann, oder eine $C_6$-$C_{20}$-Aryl- oder Arylalkylgruppe, $R^3$ eine $C_1$-$C_{20}$-Alkylgruppe bedeutet und n für die Zahlen 1, 2 oder 3 steht.

**5.** Verfahren zur Herstellung der titanhaltigen Feststoffkomponente a) der Katalysatorsysteme gemäß dem Anspruch 4, dadurch gekennzeichnet, daß man

a) in einer ersten Stufe das feinteilige Trägermaterial mit einer Lösung einer magnesiumhaltigen Verbindung in einem flüssigen Alkan bei einer Temperatur zwischen 10 und 120 °C versetzt, anschließend ein Halogen oder einen Halogenwasserstoff im wenigstens zweifachen molaren Überschuß bezogen auf die magnesiumhaltige Verbindung, hinzufügt und nach etwa 30 bis 120 Minuten zu diesem Gemisch bei einer Temperatur zwischen 10 und 150 °C ein $C_1$-$C_8$-Alkanol, ein Halogenid oder ein Alkoholat des drei- oder vierwertigen Titans sowie einen Benzophenon-2-carbonsäureester der Formel I hinzufügt, wobei man pro Mol Magnesium aus der magnesiumhaltigen Verbindung 1 bis 5 Mol Alkanol, 2 bis 20 Mol des drei-oder vierwertigen Titans und 0,01 bis 1 Mol des Benzophenon-2-carbonsäureesters verwendet, anschließend den so erhaltenen festen Stoff abfiltriert und mit einem $C_7$-$C_{10}$-Alkylbenzol wäscht,

b) dann in einer zweiten Stufe den in der ersten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel extrahiert und anschließend solange mit einem flüssigen Alkan wäscht, bis der Gehalt der Waschflüssigkeit an Titantetrachlorid weniger als 2 Gew.-% beträgt.

**6.** Verfahren zur Herstellung von Polymerisaten des Propylens durch Polymerisation von Propylen und gegebenenfalls von zugegebenen Comonomeren bei Temperaturen von 20 bis 150 °C und Drücken von 1 bis 100 bar in Gegenwart von Katalysatorsystemen vom Typ der Ziegler-Natta-Katalysatoren, dadurch gekennzeichnet, daß man hierzu Katalysatorsysteme gemäß einem der Ansprüche 1 bis 4 verwendet.

**Patentansprüche für folgende Vertragsstaaten : AT, BE, NL**

**1.** Katalysatorsysteme vom Typ der Ziegler-Natta-Katalysatoren, enthaltend als aktive Bestandteile

a) eine titanhaltige Feststoffkomponente, die Titan, Magnesium, Halogen und einen Carbonsäureester enthält,

sowie als Cokatalysator

b) eine Aluminiumverbindung und

c) gegebenenfalls weitere Elektronendonorverbindungen,

dadurch gekennzeichnet, daß sie in der Feststoffkomponente a) als Carbonsäureester einen Ester einer Benzophenon-2-carbonsäure der Formel I

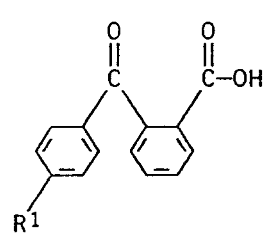

(I)

enthalten, in der $R^1$ ein H-Atom, eine $C_1$-$C_{15}$-Alkylgruppe oder ein Halogenatom bedeutet, und wobei

als Hydroxyverbindungen $C_1$-$C_{15}$-Alkanole, $C_5$-$C_7$-Cycloalkanole, die ihrerseits $C_1$-$C_{10}$-Alkylgruppen tragen können, oder $C_1$-$C_6$-Phenole verwendet werden.

**2.** Katalysatorsysteme nach Anspruch 1, dadurch gekennzeichnet, daß sie einen Ester der Benzophenon-2-carbonsäure der Formel I enthalten, in der $R^1$ eine $C_1$-$C_4$-Alkylgruppe oder ein Chloratom bedeutet.

**3.** Katalysatorsysteme nach Anspruch 1 oder 2, die als Cokatalysator und Aluminiumverbindung eine Trialkylaluminiumverbindung enthalten, deren Alkylgruppen jeweils 1-8 C-Atome aufweisen.

**4.** Katalysatorsysteme nach den Ansprüchen 1 bis 3, die als weitere Elektronendonorverbindung c, eine Siliciumverbindung der Formel II

$R^2nSi(OR^3)_{4-n}$ (II)

enthalten, in der $R^2$ eine $C_1$-$C_{20}$-Alkylgruppe, eine 5- bis 7-gliedrige Cycloalkylgruppe, die ihrerseits eine $C_1$-$C_{10}$-Alkylgruppe tragen kann, oder eine $C_6$-$C_{20}$-Aryl- oder Arylalkylgruppe, $R^3$ eine $C_1$-$C_{20}$-Alkylgruppe bedeutet und n für die Zahlen 1, 2 oder 3 steht.

**5.** Katalysatorsysteme nach den Ansprüchen 1 bis 4, dadurch gekennzeichnet, daß die titanhaltige Feststoffkomponente a) $SiO_2 \cdot aAl_2O_3$ als Trägermaterial enthält, wobei a für einen Wert im Bereich von 0 bis 2 steht.

**6.** Verfahren zur Herstellung der titanhaltigen Feststoffkomponente a) der Katalysatorsysteme gemäß dem Anspruch 5, dadurch gekennzeichnet, daß man
a) in einer ersten Stufe das feinteilige Trägermaterial mit einer Lösung einer magnesiumhaltigen Verbindung in einem flüssigen Alkan bei einer Temperatur zwischen 10 und 120 °C versetzt, anschließend ein Halogen oder einen Halogenwasserstoff im wenigstens zweifachen molaren Überschuß bezogen auf die magnesiumhaltige Verbindung, hinzufügt und nach etwa 30 bis 120 Minuten zu diesem Gemisch bei einer Temperatur zwischen 10 und 150 °C ein $C_1$-$C_8$-Alkanol, ein Halogenid oder ein Alkoholat des drei- oder vierwertigen Titans sowie einen Benzophenon-2-carbonsäureester der Formel I hinzufügt, wobei man pro Mol Magnesium aus der magnesiumhaltigen Verbindung 1 bis 5 Mol Alkanol, 2 bis 20 Mol des drei-oder vierwertigen Titans und 0,01 bis 1 Mol des Benzophenon-2-carbonsäureesters verwendet, anschließend den so erhaltenen festen Stoff abfiltriert und mit einem $C_7$-$C_{10}$-Alkylbenzol wäscht,
b) dann in einer zweiten Stufe den in der ersten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel extrahiert und anschließend solange mit einem flüssigen Alkan wäscht, bis der Gehalt der Waschflüssigkeit an Titantetrachlorid weniger als 2 Gew.-% beträgt.

**7.** Verfahren zur Herstellung von Polymerisaten des Propylens durch Polymerisation von Propylen und gegebenenfalls von zugegebenen Comonomeren bei Temperaturen von 20 bis 150 °C und Drücken von 1 bis 100 bar in Gegenwart von Katalysatorsystemen vom Typ der Ziegler-Natta-Katalysatoren, dadurch gekennzeichnet, daß man hierzu Katalysatorsysteme gemäß einem der Ansprüche 1 bis 5 verwendet.

**8.** Polymerisate des Propylens, erhältlich nach dem Verfahren gemäß Anspruch 7.

**9.** Folien und Formkörper aus den Polymerisaten gemäß Anspruch 8.

**Patentansprüche für folgenden Vertragsstaat : ES**

**1.** Verfahren zur Herstellung von Katalysatorsystemen vom Typ der Ziegler-Natta-Katalysatoren, enthalend als aktive Bestandteile
a) eine titanhaltige Feststoffkomponente, die Titan, Magnesium, Halogen und einen Carbonsäureester enthält,
sowie als Cokatalysator
b) eine Aluminiumverbindung und

c) gegebenenfalls weitere Elektronendonorverbindungen,
dadurch gekennzeichnet, daß man hierzu in der Feststoffkomponente a) als Carbonsäureester einen Ester einer Benzophenon-2-carbonsäure der Formel I

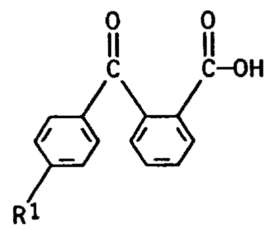

(I)

verwendet, in der $R^1$ ein H-Atom, eine $C_1$-$C_{15}$-Alkylgruppe oder ein Halogenatom bedeutet,
und wobei als Hydroxyverbindungen $C_1$-$C_{15}$-Alkanole, $C_5$-$C_7$-Cycloalkanole, die ihrerseits $C_1$-$C_{10}$-Alkylgruppen tragen können, oder $C_1$-$C_6$-Phenole verwendet werden.

2. Verfahren nach Anspruch 1, dadurch gekennzeichnet, daß man in der Feststoffkomponente a) einen Ester der Benzophenon-2-carbonsäure der Formel I verwendet, in der $R^1$ eine $C_1$-$C_4$-Alkylgruppe oder ein Chloratom bedeutet.

3. Verfahren nach Anspruch 1 oder 2, dadurch gekennzeichnet, daß man als Cokatalysator und Aluminiumverbindung b) eine Trialkylaluminiumverbindung verwendet, deren Alkylgruppen jeweils 1 bis 8 C-Atome aufweisen.

4. Verfahren nach den Ansprüchen 1 bis 3, dadurch gekennzeichnet, daß man als weitere Elektronendonorverbindung c, eine Siliciumverbindung der Formel II

$R^2nSi(OR^3)_{4-n}$ (II)

verwendet, in der $R^2$ eine $C_1$-$C_{20}$-Alkylgruppe, eine 5- bis 7-gliedrige Cycloalkylgruppe, die ihrerseits eine $C_1$-$C_{10}$-Alkylgruppe tragen kann, oder eine $C_6$-$C_{20}$-Aryl- oder Arylalkylgruppe, $R^3$ eine $C_1$-$C_{20}$-Alkylgruppe bedeutet und n für die Zahlen 1, 2 oder 3 steht.

5. Verfahren nach den Ansprüchen 1 bis 4, dadurch gekennzeichnet, daß man in der titanhaltigen Feststoffkomponente a) $SiO_2 \cdot aAl_2O_3$ als Trägermaterial verwendet, wobei a für einen Wert im Bereich von O bis 2 steht.

6. Verfahren nach Anspruch 5, dadurch gekennzeichnet, daß man
a) in einer ersten Stufe das feinteilige Trägermaterial mit einer Lösung einer magnesiumhaltigen Verbindung in einem flüssigen Alkan bei einer Temperatur zwischen 10 und 120 °C versetzt, anschließend ein Halogen oder einen Halogenwasserstoff im wenigstens zweifachen molaren überschuß bezogen auf die magnesiumhaltige Verbindung, hinzufügt und nach etwa 30 bis 120 Minuten zu diesem Gemisch bei einer Temperatur zwischen 10 und 150 °C ein $C_1$-$C_8$-Alkanol, ein Halogenid oder ein Alkoholat des drei- oder vierwertigen Titans sowie einen Benzophenon-2-carbonsäureester der Formel I hinzufügt, wobei man pro Mol Magnesium aus der magnesiumhaltigen Verbindung 1 bis 5 Mol Alkanol, 2 bis 20 Mol des drei-oder vierwertigen Titans und 0,01 bis 1 Mol des Benzophenon-2-carbonsäureesters verwendet, anschließend den so erhaltenen festen Stoff abfiltriert und mit einem $C_7$-$C_{10}$-Alkylbenzol wäscht,
b) dann in einer zweiten Stufe den in der ersten Stufe erhaltenen Feststoff einige Stunden lang bei Temperaturen zwischen 100 und 150 °C mit überschüssigem Titantetrachlorid oder einer im überschuß vorliegenden Lösung von Titantetrachlorid in einem inerten Lösungsmittel extrahiert und anschließend solange mit einem flüssigen Alkan wäscht, bis der Gehalt der Waschflüssigkeit an Titantetrachlorid weniger als 2 Gew.-% beträgt.

7. Verfahren zur Herstellung von Polymerisaten des Propylens durch Polymerisation von Propylen und gegebenenfalls von zugegebenen Comonomeren bei Temperaturen von 20 bis 150 °C und Drücken von 1 bis 100 bar in Gegenwart von Katalysatorsystemen vom Typ der Ziegler-Natta-Katalysatoren,

dadurch gekennzeichnet, daß man hierzu Katalysatorsysteme gemäß einem der Ansprüche 1 bis 5 verwendet.

8. Verfahren zur Herstellung von Folien und Formkörpern, dadurch gekennzeichnet, daß man hierzu die nach dem Verfahren von Anspruch 7 erhältlichen Polymerisate verwendet.

**Claims**

**Claims for the following Contracting States : DE, FR, GB, IT**

1. A Ziegler-Natta-type catalyst system containing, as active constituents,
   a) a titanium-containing solid component which also contains magnesium, halogen, a carboxylic acid ester and $SiO_2 \cdot aAl_2O_3$ as carrier material, where a is from 0 to 2,
   and, as cocatalyst,
   b) an aluminum compound, and
   c) if desired a further electron donor,

   wherein the carboxylic acid ester in solid component a) is an ester of a benzophenone-2-carboxylic acid of the formula I

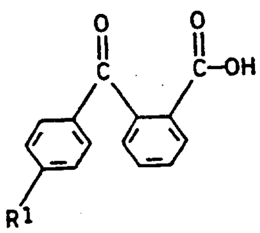

(I)

where $R^1$ is hydrogen, $C_1$-$C_{15}$-alkyl or halogen, and the hydroxyl compound used is a $C_1$-$C_{15}$-alkanol, a $C_5$-$C_7$-cycloalkanol, which may itself carry $C_1$-$C_{10}$-alkyl groups, or a $C_1$-$C_6$-phenol.

2. A catalyst system as claimed in claim 1, which contains an ester of the benzophenone-2-carboxylic acid of the formula I where $R^1$ is $C_1$-$C_4$-alkyl or chlorine.

3. A catalyst system as claimed in claim 1 or 2, which contains, as cocatalyst and aluminum compound, a trialkylaluminum compound in which the alkyl groups each have from 1 to 8 carbon atoms.

4. A catalyst system as claimed in claim 1 or 2 or 3, wherein the further electron donor c) is a silicon compound of the formula II

$R^2_n Si(OR^3)_{4-n}$ (II)

where $R^2$ is $C_1$-$C_{20}$-alkyl, 5- to 7-membered cycloalkyl, which may itself carry a $C_1$-$C_{10}$-alkyl group, or $C_6$-$C_{20}$-aryl or arylalkyl, $R^3$ is $C_1$-$C_{20}$-alkyl, and n is 1, 2 or 3.

5. A process for the preparation of the titanium-containing solid component a) in the catalyst system as claimed in claim 4, which comprises
   a) adding, in a first step, a solution of a magnesium-containing compound in a liquid alkane to the finely divided carrier material at from 10 to 120 °C, subsequently adding a halogen or a hydrogen halide in an at least two-fold molar excess, based on the magnesium-containing compound, and, after from about 30 to 120 minutes, adding a $C_1$-$C_8$-alkanol, a halide or an alkoxide of trivalent or tetravalent titanium and a benzophenone-2-carboxylate of the formula I to this mixture at from 10 to 150 °C, from 1 to 5 mol of alkanol, from 2 to 20 mol of trivalent or tetravalent titanium and from 0.01 to 1 mol of the benzophenone-2-carboxylate being used per mol of magnesium from the magnesium-containing compound, and subsequently filtering off the resultant solid and washing it with a $C_7$-$C_{10}$-alkylbenzene,
   b) then, in a second step, extracting the solid obtained in the first step for several hours at from 100 to 150 °C with excess titanium tetrachloride or an excess of a solution of titanium tetrachloride in an inert solvent, and subsequently washing the product with a liquid alkane until the content of titanium

tetrachloride in the washings is less than 2 % by weight.

6. A process for the preparation of a propylene polymer by polymerizing propylene and, if desired, added comonomers at from 20 to 150 °C and from 1 to 100 bar in the presence of a Ziegler-Natta-type catalyst system, which comprises using a catalyst system as claimed in claim 1 or 2 or 3 or 4.

**Claims for the following Contracting States : AT, BE, NL**

1. A Ziegler-Natta-type catalyst system containing, as active constituents,
   a) a titanium-containing solid component which also contains magnesium, halogen and a carboxylic acid ester,
   and, as cocatalyst,
   b) an aluminum compound, and
   c) if desired a further electron donor,
   wherein the carboxylic acid ester in solid component a) is an ester of a benzophenone-2-carboxylic acid of the formula I

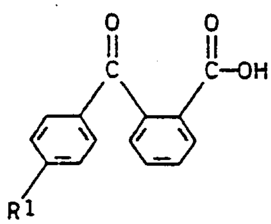

(I)

where $R^1$ is hydrogen, $C_1$-$C_{15}$-alkyl or halogen, and the hydroxyl compound used is a $C_1$-$C_{15}$-alkanol, a $C_5$-$C_7$-cycloalkanol, which may itself carry $C_1$-$C_{10}$-alkyl groups, or a $C_1$-$C_6$-phenol.

2. A catalyst system as claimed in claim 1, which contains an ester of the benzophenone-2-carboxylic acid of the formula I where $R^1$ is $C_1$-$C_4$-alkyl or chlorine.

3. A catalyst system as claimed in claim 1 or 2, which contains, as cocatalyst and aluminum compound, a trialkylaluminum compound in which the alkyl groups each have from 1 to 8 carbon atoms.

4. A catalyst system as claimed in claim 1 or 2 or 3, wherein the further electron donor c) is a silicon compound of the formula II

$R^2_n\,Si(OR^3)_{4-n}$ (II)

where $R^2$ is $C_1$-$C_{20}$-alkyl, 5- to 7-membered cycloalkyl, which may itself carry a $C_1$-$C_{10}$-alkyl group, or $C_6$-$C_{20}$-aryl or arylalkyl, $R^3$ is $C_1$-$C_{20}$-alkyl, and n is 1, 2 or 3.

5. A catalyst system as claimed in claim 1 or 2 or 3 or 4, wherein the titanium-containing solid component a) contains $SiO_2 \cdot aAl_2O_3$ as carrier material, where a is from 0 to 2.

6. A process for the preparation of the titanium-containing solid component a) in the catalyst system as claimed in claim 5, which comprises
   a) adding, in a first step, a solution of a magnesium-containing compound in a liquid alkane to the finely divided carrier material at from 10 to 120 °C, subsequently adding a halogen or a hydrogen halide in an at least two-fold molar excess, based on the magnesium-containing compound, and, after from about 30 to 120 minutes, adding a $C_1$-$C_8$-alkanol, a halide or an alkoxide of trivalent or tetravalent titanium and a benzophenone-2-carboxylate of the formula I to this mixture at from 10 to 150 °C, from 1 to 5 mol of alkanol, from 2 to 20 mol of trivalent or tetravalent titanium and from 0.01 to 1 mol of the benzophenone-2-carboxylate being used per mol of magnesium from the magnesium-containing compound, and subsequently filtering off the resultant solid and washing it with a $C_7$-$C_{10}$-alkylbenzene,

b) then, in a second step, extracting the solid obtained in the first step for several hours at from 100 to 150 °C with excess titanium tetrachloride or an excess of a solution of titanium tetrachloride in an inert solvent, and subsequently washing the product with a liquid alkane until the content of titanium tetrachloride in the washings is less than 2 % by weight.

**7.** A process for the preparation of a propylene polymer by polymerizing propylene and, if desired, added comonomers at from 20 to 150 °C and from 1 to 100 bar in the presence of a Ziegler-Natta-type catalyst system, which comprises using a catalyst system as claimed in claim 1 or 2 or 3 or 4 or 5.

**8.** A propylene polymer obtainable by a process as claimed in claim 7.

**9.** A film or molding made from a polymer as claimed in claim 8.

**Claims for the following Contracting State : ES**

**1.** A process for the preparation of a Ziegler-Natta-type catalyst system containing, as active constituents,
a) a titanium-containing solid component which also contains magnesium, halogen and a carboxylic acid ester,
and, as cocatalyst,
b) an aluminum compound, and
c) if desired a further electron donor,
wherein the carboxylic acid ester used in solid component a) is an ester of a benzophenone-2-carboxylic acid of the formula I

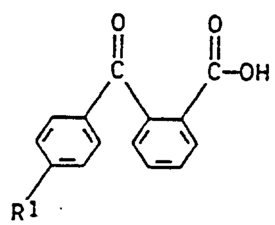

(I)

where $R^1$ is hydrogen, $C_1$-$C_{15}$-alkyl or halogen, and the hydroxyl compound used is a $C_1$-$C_{15}$-alkanol, a $C_5$-$C_7$-cycloalkanol, which may itself carry $C_1$-$C_{10}$-alkyl groups, or a $C_1$-$C_6$-phenol.

**2.** A process as claimed in claim 1, wherein an ester of the benzophenone-2-carboxylic acid of the formula I where $R^1$ is $C_1$-$C_4$-alkyl or chlorine is used in solid component a).

**3.** A process as claimed in claim 1 or 2, wherein the cocatalyst and aluminum compound b) is a trialkylaluminum compound in which the alkyl groups each have from 1 to 8 carbon atoms.

**4.** A process as claimed in claim 1 or 2 or 3, wherein the further electron donor c) is a silicon compound of the formula II

$R^2_n Si(OR^3)_{4-n}$ (II)

where $R^2$ is $C_1$-$C_{20}$-alkyl, 5- to 7-membered cycloalkyl, which may itself carry a $C_1$-$C_{10}$-alkyl group, or $C_6$-$C_{20}$-aryl or arylalkyl, $R^3$ is $C_1$-$C_{20}$-alkyl, and n is 1, 2 or 3.

**5.** A process as claimed in claim 1 or 2 or 3 or 4, wherein the carrier material used in the titanium-containing solid component a) is $SiO_2 \cdot aAl_2O_3$, where a is from 0 to 2.

**6.** A process as claimed in claim 5, which comprises
a) adding, in a first step, a solution of a magnesium-containing compound in a liquid alkane to the finely divided carrier material at from 10 to 120 °C, subsequently adding a halogen or a hydrogen halide in an at least two-fold molar excess, based on the magnesium-containing compound, and,

after from about 30 to 120 minutes, adding a $C_1$-$C_8$-alkanol, a halide or an alkoxide of trivalent or tetravalent titanium and a benzophenone-2-carboxylate of the formula I to this mixture at from 10 to 150 °C, from 1 to 5 mol of alkanol, from 2 to 20 mol of trivalent or tetravalent titanium and from 0.01 to 1 mol of the benzophenone-2-carboxylate being used per mol of magnesium from the magnesium-containing compound, and subsequently filtering off the resultant solid and washing it with a $C_7$-$C_{10}$-alkylbenzene,

b) then, in a second step, extracting the solid obtained in the first step for several hours at from 100 to 150 °C with excess titanium tetrachloride or an excess of a solution of titanium tetrachloride in an inert solvent, and subsequently washing the product with a liquid alkane until the content of titanium tetrachloride in the washings is less than 2 % by weight.

**7.** A process for the preparation of a propylene polymer by polymerizing propylene and, if desired, added comonomers at from 20 to 150 °C and from 1 to 100 bar in the presence of a Ziegler-Natta-type catalyst system, which comprises using a catalyst system as claimed in claim 1 or 2 or 3 or 4 or 5.

**8.** A process for the production of a film or molding, which comprises using the polymer obtainable by the process of claim 7.

**Revendications**

**Revendications pour les Etats contractants suivants : DE, FR, GB, IT**

**1.** Systèmes catalytiques du type des catalyseurs de Ziegler-Natta, contenant, comme constituants actifs,

a) un composant solide titané qui contient du titane, du magnésium, un halogène, un ester d'acide carboxylique et $SiO_2.aAl_2O_3$ en tant que matière de support, a étant mis pour une valeur dans la plage de 0 à 2,

ainsi que, comme co-catalyseur,

b) un composé de l'aluminium et

c) éventuellement d'autres composés donneurs d'électrons,

caractérisés en ce qu'ils contiennent, dans le composant solide a), en tant qu'ester d'acide carboxylique, un ester d'un acide benzophénone-2-carboxylique de formule I

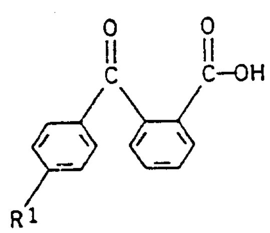

(I)

dans laquelle $R^1$ représente un atome d'hydrogène, un groupement alkyle en $C_1$-$C_{15}$ ou un atome d'halogène, les composés hydroxylés utilisés étant des alcanols en $C_1$-$C_{15}$,des cycloalcanols en $C_5$-$C_7$, qui peuvent porter de leur côté des groupements alkyle en $C_1$-$C_{10}$, ou des phénols en $C_1$-$C_6$.

**2.** Systèmes catalytiques selon la revendication 1, caractérisés en ce qu'ils contiennent un ester de l'acide benzophénone-2-carboxylique de formule I dans laquelle $R^1$ représente un groupement alkyle en $C_1$-$C_4$ ouun atome de chlore.

**3.** Systèmes catalytiques selon la revendication 1 ou 2, caractérisés en ce qu'ils contiennent, comme cocatalyseur et composé de l'aluminium, un trialkylaluminium dont les groupements alkyle renferment chacun 1 à 8 atomes de carbone.

**4.** Systèmes catalytiques selon l'une quelconque des revendications 1 à 3, qui contiennent, comme autre composé donneur d'électrons c), un composé du silicium de formule II

$R^2_nSi(OR^3)_{4-n}$ (II)

dans laquelle $R^2$ représente un groupement alkyle en $C_1$-$C_{20}$,un groupement cycloalkyle à 5-7 chaînons, qui peut porter de son côté un groupement alkyle en $C_1$-$C_{10}$, ou un groupement aryle ou arylalkyle en $C_6$-$C_{20}$, $R^3$ représente un groupement alkyle en $C_1$-$C_{20}$ et n est mis pour le nombre 1, 2 ou 3.

**5.** Procédé de préparation du composant solide titané a) des systèmes catalytiques selon la revendication 4, caractérisé en ce que

a) dans une première étape, on mélange la matière de support finement divisée avec une solution d'un composé magnésien dans un alcane liquide à une température comprise entre 10 et 120 °C, puis on ajoute un halogène ou un hydracide halogéné en excès molaire d'au moins deux fois par rapport au composé magnésien et, après 30 à 120 mn environ, on ajoute à ce mélange, à une température comprise entre 10 et 150 °C, un alcanol en $C_1$-$C_8$, un halogénure ou un alcoolate du titane tri- ou tétravalent, ainsi qu'un ester d'acide benzophénone-2-carboxylique de formule I, en utilisant, par mole de magnésium du composé magnésien, 1 à 5 moles d'alcanol, 2 à 20 moles du titane tri- ou tétravalent et 0,01 à 1 mole de l'ester d'acide benzophénone-2-carboxylique, après quoi on filtre la matière solide ainsi obtenue et on la lave avec un alkylbenzène en $C_7$-$C_{10}$,

b) puis, dans une seconde étape, on extrait la matière solide obtenue dans la première étape, pendant quelques heures à des températures comprises entre 100 et 150 °C, avec du tétrachlorure de titane en excès ou avec une solution, présente en excès, de tétrachlorure de titane dans un solvant inerte, et on lave ensuite avec un alcane liquide jusqu'à ce que la teneur du liquide de lavage en tétrachlorure de titane soit inférieure à 2% en poids.

**6.** Procédé de préparation de polymères du propylène par polymérisation de propylène et éventuellement de comonomères ajoutés, à des températures de 20 à 150 °C et sous des pressions de 1 à 100 bar, en présence de systèmes catalytiques du type des catalyseurs de Ziegler-Natta, caractérisé en ce qu'on utilise à cet effet des systèmes catalytiques selon l'une quelconque des revendications 1 à 4.

**Revendications pour les Etats contractants suivants : AT, BE, NL**

**1.** Systèmes catalytiques du type des catalyseurs de Ziegler-Natta, contenant, comme constituants actifs,

a) un composant solide titané qui contient du titane, du magnésium, un halogène et un ester d'acide carbocylique,

ainsi que, comme co-catalyseur,

b) un composé de l'aluminium et

c) éventuellement d'autres composés donneurs d'électrons,

caractérisés en ce qu'ils contiennent, dans le composant solide a), en tant qu'ester d'acide carboxylique, un ester d'un acide benzophénone-2-carboxylique de formule I

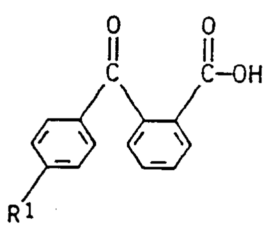

(I)

dans laquelle $R^1$ représente un atome d'hydrogène, un groupement alkyle en $C_1$-$C_{15}$ ou un atome d'halogène, les composés hydroxylés utilisés étant des alcanols en $C_1$-$C_{15}$,des cycloalcanols en $C_5$-$C_7$, qui peuvent porter de leur côté des groupements alkyle en $C_1$-$C_{10}$, ou des phénols en $C_1$-$C_6$.

**2.** Systèmes catalytiques selon la revendication 1, caractérisés en ce qu'ils contiennent un ester de l'acide benzophénone-2-carboxylique de formule I dans laquelle $R^1$ représente un groupement alkyle en $C_1$-$C_4$ ouun atome de chlore.

**3.** Systèmes catalytiques selon la revendication 1 ou 2, caractérisés en ce qu'ils contiennent, comme cocatalyseur et composé de l'aluminium, un trialkylaluminium dont les groupements alkyle renferment

chacun 1 à 8 atomes de carbone.

**4.** Systèmes catalytiques selon l'une quelconque des revendications 1 à 3, qui contiennent, comme autre composé donneur d'électrons c), un composé du silicium de formule II

$R^2_nSi(OR^3)_{4-n}$ (II)

dans laquelle $R^2$ représente un groupement alkyle en $C_1$-$C_{20}$,un groupement cycloalkyle à 5-7 chaînons, qui peut porter de son côté un groupement alkyle en $C_1$-$C_{10}$, ou un groupement aryle ou arylalkyle en $C_6$-$C_{20}$, $R^3$ représente un groupement alkyle en $C_1$-$C_{20}$ et n est mis pour le nombre 1, 2 ou 3.

**5.** Systèmes catalytiques selon l'une quelconque des revendications 1 à 4, caractérisés en ce que le composant solide titané a) contient $SiO_2.aAl_2O_3$ comme matière de support, a étant mis pour une valeur dans la gamme de 0 à 2.

**6.** Procédé de préparation du composant solide titané a) des systèmes catalytiques selon la revendication 5, caractérisé en ce que

a) dans une première étape, on mélange la matière de support finement divisée avec une solution d'un composé magnésien dans un alcane liquide à une température comprise entre 10 et 120 °C, puis on ajoute un halogène ou un hydracide halogéné en excès molaire d'au moins deux fois par rapport au composé magnésien et, après 30 à 120 mn environ, on ajoute à ce mélange, à une température comprise entre 10 et 150 °C, un alcanol en $C_1$-$C_8$, un halogénure ou un alcoolate du titane tri- ou tétravalent, ainsi qu'un ester d'acide benzophénone-2-carboxylique de formule I, en utilisant, par mode de magnésium du composé magnésien, 1 à 5 moles d'alcanol, 2 à 20 moles du titane tri- ou tétravalent et 0,01 à 1 mole de l'ester d'acide benzophénone-2-carboxylique, après quoi on filtre la matière solide ainsi obtenue et on la lave avec un alkylbenzène en $C_7$-$C_{10}$,

b) puis, dans une seconde étape, on extrait la matière solide obtenue dans la première étape, pendant quelques heures à des températures comprises entre 100 et 150 °C, avec du tétrachlorure de titane en excès ou avec une solution, présente en excès, de tétrachlorure de titane dans un solvant inerte, et on lave ensuite avec un alcane liquide jusqu'à ce que la teneur du liquide de lavage en tétrachlorure de titane soit inférieure à 2% en poids.

**7.** Procédé de préparation de polymères du propylène par polymérisation de propylène et éventuellement de comonomères ajoutés, à des températures de 20 à 150 °C et sous des pressions de 1 à 100 bar, en présence de systèmes catalytiques du type des catalyseurs de Ziegler-Natta, caractérisé en ce qu'on utilise à cet effet des systèmes catalytiques selon l'une quelconque des revendications 1 à 5.

**8.** Polymères du propylène, obtenus suivant le procédé selon la revendication 7.

**9.** Feuilles et corps moulés en polymères selon la revendication 8.

**Revendications pour l'Etat contractant suivant : ES**

**1.** Procédé de préparation de systèmes catalytiques du type des catalyseurs de Ziegler-Natta, contenant, comme constituant actifs,

a) un composant solide titané qui contient du titane, du magnésium, un halogène et un ester d'acide carboxylique,

ainsi que, comme co-catalyseur,

b) un composé de l'aluminium et

c) éventuellement d'autres composés donneurs d'électrons,

caractérisé en ce qu'on utilise à cet effet, dans le composant solide a), en tant qu'ester d'acide carboxylique, un ester d'un acide benzophénone-2-carboxylique de formule I

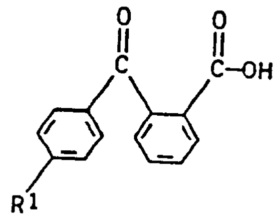

(I)

dans laquelle $R^1$ représente un atome d'hydrogène, un groupement alkyle en $C_1$-$C_{15}$ ou un atome d'halogène, les composés hydroxyles utilisés étant des alcanols en $C_1$-$C_{15}$,des cycloalcanols en $C_5$-$C_7$, qui peuvent porter de leur côté des groupements alkyle en $C_1$-$C_{10}$, ou des phénols en $C_1$-$C_6$.

2. Procédé selon la revendication 1, caractérisé en ce qu'on utilise, dans le composent solide a), un ester de l'acide benzophénone-2-carboxylique de formule I dans laquelle $R^1$ représente un groupement alkyle en $C_1$-$C_4$ ouun atome de chlore.

3. Procédé selon la revendication 1 ou 2, caractérisé en ce qu'on utilise, comme co-catalyseur et composé de l'aluminium b), un trialkylaluminium dont les groupements alkyle renferment chacun 1 à 8 atomes de carbone.

4. Procédé selon l'une quelconque des revendications 1 à 3, caractérisé en ce qu'on utilise, comme autre composé donneur d'électrons c), un composé du silicium de formule II

$R^2_nSi(OR^3)_{4-n}$ (II)

dans laquelle $R^2$ représente un groupement alkyle en $C_1$-$C_{20}$,un groupement cycloalkyle à 5-7 chaînons, qui peut porter de son côté un groupement alkyle en $C_1$-$C_{10}$, ou un groupement aryle ou arylalkyle en $C_6$-$C_{20}$, $R^3$ représente un groupement alkyle en $C_1$-$C_{20}$ et n est mis pour le nombre 1, 2 ou 3.

5. Procédé selon l'une quelconque des revendications 1 à 4, caractérisé en ce que, dans le composent solide titané a), on utilise $SiO_2.aAl_2O_3$ comme matière de support, a étant mis pour une valeur dans la gamme de 0 à 2.

6. Procédé selon la revendication 5, caractérisé en ce que
   a) dans une première étape, on mélange la matière de support finement divisée avec une solution d'un composé magnésien dans un alcane liquide à une température comprise entre 10 et 120 °C, puis on ajoute un halogène ou un hydracide halogéné en excès molaire d'au moins deux fois par rapport au composé magnésien et, après 30 à 120 mn environ, on ajoute à ce mélange, à une température comprise entre 10 et 150 °C, un alcanol en $C_1$-$C_8$, un halogénure ou un alcoolate du titane tri- ou tétravalent, ainsi qu'un ester d'acide benzophénone-2-carboxylique de formule I, en utilisant, par mole de magnésium du composé magnésien, 1 à 5 moles d' alcanol, 2 à 20 moles du titane tri- ou tétravalent et 0,01 à 1 mole de l'ester d'acide benzophénone-2-carboxylique, après quoi on filtre la matière solide ainsi obtenue et on la lave avec un alkylbenzène en $C_7$-$C_{10}$,
   b) puis, dans une seconde étape, on extrait la matière solide obtenue dans la première étape, pendant quelques heures à des températures comprises entre 100 et 150 °C, avec du tétrachlorure de titane en excès ou avec une solution, présente en excès, de tétrachlorure de titane dans un solvant inerte, et on lave ensuite avec un alcane liquide jusqu'à ce que la teneur du liquide de lavage en tétrachlorure de titane soit inférieure à 2% en poids.

7. Procédé de préparation de polymères du propylène par polymérisation de propylène et éventuellement de comonomères ajoutés, à des températures de 20 à 150 °C et sous des pressions de 1 à 100 bar, en présence de systèmes catalytiques du type des catalyseurs de Ziegler-Natta, caractérise en ce qu'on utilise a cet effet des systèmes catalytiques selon l'une quelconque des revendications 1 à 5.

8. Procédé de fabrication de feuilles et de corps moulés, caractérisé en ce qu'on utilise à cet effet les polymères obtenus suivant le procédé selon la revendication 7.